# EUROPÄISCHE PATENTSCHRIFT

(11) **EP 1 393 948 B1**
(45) Veröffentlichungstag und Bekanntmachung des Hinweises auf die Patenterteilung: **23.09.2009**
(21) Anmeldenummer: 03018146.5
(22) Anmeldetag: 08.08.2003
(51) Int. Cl.: B60J 7/12, B60J 7/185

(54) **Fahrzeugverdeck mit einem Verdeckstoff und einem Dachteil**
Vehicle roof with a soft top material and a roof part
Toit pour voiture avec un capote et un élément de toit

(30) Priorität: 28.08.2002 DE 10240213
(43) Veröffentlichungstag der Anmeldung: 03.03.2004
(73) Patentinhaber: Webasto AG, 82131 Stockdorf (DE)
(72) Erfinder: Dietl, Rudolf, 81247 München (DE)
(74) Vertreter: Lösch, Christoph Ludwig Klaus

(56) Entgegenhaltungen:
- DE-A- 4 405 356
- FR-A- 1 547 501
- GB-A- 397 795
- US-A1- 2001 022 453

## Beschreibung

Die Erfindung betrifft ein Verdeck eines Fahrzeugs mit einem Dachteil. Ferner betrifft die Erfindung ein Dachmodul mit einem Verdeck.

Als Stand der Technik ist aus der US 4,684,419 ein Verdeck für ein Fahrzeug bekannt, bei dem der Verdeckstoff umgenäht und in einer entstehenden Ausnehmung ein stabförmiges Befestigungsteil aufgenommen ist.

Dokument FR 1547501 beschreibt ein Verdeck gemäß dem Oberbegriff des Anspruchs 1.

Der Erfindung liegt die Aufgabe zugrunde, ein Verdeck eines Fahrzeugs anzubieten, bei dem der Verdeckstoff besonders variabel mit einem Dachteil des Verdecks verbunden ist. Ferner soll ein Dachmodul mit einem derartigen Verdeck angeboten werden.

Die Erfindung wird für das Verdeck durch die Merkmale des Patentanspruchs 1 gelöst. Vorteilhafte Ausführungsformen werden in den Unteransprüchen 2-8 realisiert. Für das Dachmodul wird die Aufgabe durch die Merkmale des Patentanspruchs 7 gelöst.

Das erfindungsgemäße Verdeck eines Fahrzeugs besitzt ein Dachteil, welches mit einem Verdeckstoff verbunden ist, wobei am Verdeckstoff mindestens ein Befestigungselement angebracht ist, welches im montierten Zustand des Verdecks lösbar mit mindestens einem korrespondierenden Befestigungselement des Dachteils verbunden ist. Durch diese lösbare Verbindung können Verdeckstoff und Dachteil unabhängig voneinander vorgefertigt und in einem abschließenden Schritt montiert werden. Ferner wird ein Austausch des Verdeckstoffs z.B. aus optischen Gründen oder aus Verschleißgründen vereinfacht ermöglicht.

Das erfindungsgemäße Verdeck ist somit besonders variabel aufgebaut und ermöglicht die Verbindung bzw. das Lösen von Dachteil und Verdeckstoff zu jedem vom Benutzer gewünschten Zeitpunkt.

Nach einer vorteilhaften Ausführungsform ist das Verdeck als Faltverdeck ausgebildet und kann in unterschiedlichen teilweise oder vollständig gefalteten Öffnungspositionen verwendet werden.

Vorteilhafterweise ist das am Verdeckstoff angebrachte Befestigungselement als Flächenelement (z.B. als elastisches und an die Dachwölbung anpaßbares Flachbauteil) ausgebildet. Dabei besitzt das Befestigungselement insbesondere kammartige Vorsprünge, welche Laschen mit Ausnehmungen zum Eingriff des korrespondierenden Befestigungselements des Dachteils aufweisen.

Nach einer vorteilhaften Ausführungsform sind dabei mehrere Befestigungselemente am Verdeckstoff angebracht, welche mit mehreren korrespondierenden Befestigungselementen des Dachteils lösbar verbunden werden. Bei einer derartigen Verbindung über mehrere Befestigungselemente wird eine besonders stabile und sichere Verbindung erzielt.

Vorteilhafterweise besitzt das Dachteil mindestens eine Aussparung zur Hindurchführung und Aufnahme des am Verdeckstoff angebrachten Befestigungselements. Durch Hindurchführung des am Verdeckstoff angebrachten Befestigungselements durch die Aussparung des Dachteils entsteht bei formschlüssiger Abstimmung der Aussparung sowie des Befestigungselements des Verdeckstoffs eine weitere Führung und Stabilisierung des aufgenommenen Befestigungselements des Verdeckstoffs.

Gemäß einer weiteren vorteilhaften Ausführungsform besitzt das Dachteil einen Vorsprung, um welchen der Verdeckstoff des Verdecks bei Montage mit dem Dachteil, insbesondere zur Spannung des Verdeckstoffs, herumgeführt ist.

Das Befestigungselement des Verdeckstoffs kann über unterschiedliche Verbindungsarten mit dem Verdeckstoff verbunden sein, z.B. über Vernähen, Verkleben oder Verschweißen. In Abhängigkeit von den jeweiligen Anforderungen kann eine geeignete Verbindungsart zwischen Befestigungselement und Verdeckstoff ausgewählt werden.

Das erfindungsgemäße Dachmodul für ein Fahrzeug umfaßt ein wie vorstehend beschriebenes Verdeck. Bei einem derartigen Dachmodul, welches in eine korrespondierende Dachöffnung eines Fahrzeugs einsetzbar ist, kann der Verdeckstoff des Verdecks lösbar mit einem Dachteil des Verdecks verbunden werden. Hierdurch kann der Verdeckstoff des Dachmoduls aus optischen Gründen oder aus Verschleißgründen ausgetauscht werden. Ferner wird die Anbringung des Verdeckstoffs am Dachteil des Verdecks erleichtert.

Die Erfindung ist anhand von Ausführungsbeispielen in den Zeichnungsfiguren näher erläutert. es zeigen:
- Fig. 1: eine Gesamtansicht eines Fahrzeugs mit teilgeöffnetem Verdeck,
- Fig. 2: eine Ansicht eines Dachteils des Verdecks ohne angebrachten Verdeckstoff,
- Fig. 3: eines Dachteils des Verdecks mit angebrachtem Verdeckstoff sowie
- Fig. 4: ein Schnitt A -A nach Fig. 3 sowie
- Fig. 5: eine Darstellung eines am Verdeckstoff anbringbaren Befestigungselements.

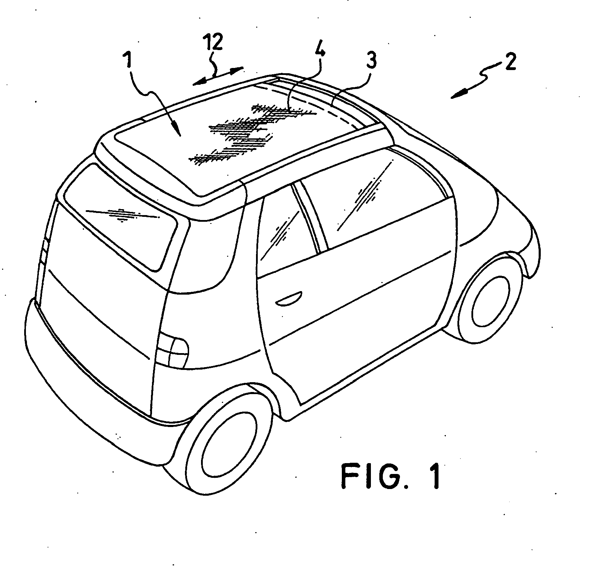

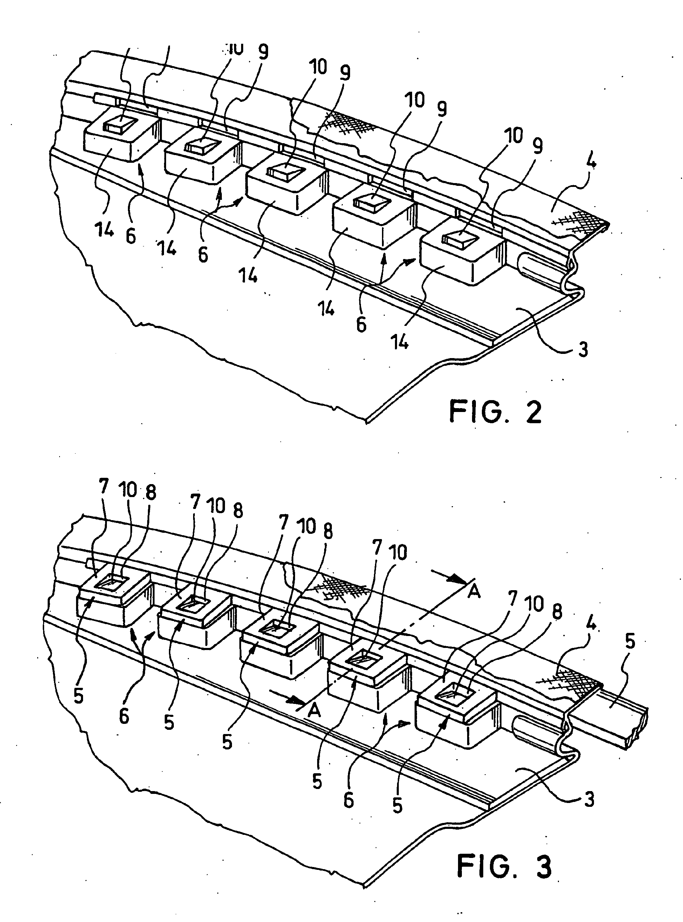

Fig. 1 zeigt ein Fahrzeug 2 mit einem teil-geöffnetem Verdeck 1, welches als Faltverdeck ausgebildet ist. Dabei besitzt das Verdeck 1 einen an sich bekannten Verdeckrahmen, der in Richtung 12 zum Öffnen und Schließen des Verdecks 1 verfahrbar ist. Das Verdeck 1 besitzt einen Verdeckstoff 4, der mit einem (vorderen) Dachteil 3 des Verdeckrahmens verbunden ist (vgl. auch Fig. 3). Das Dachteil 3 ist dabei insbesondere im vorderen aber auch in seitlichen Bereichen des Verdecks 1 angeordnet.

Fig. 2 zeigt eine Darstellung des Dachteils 3, welches nach Art einer Dachspitze als Frontspriegel des Verdecks 1 ausgebildet ist. Hierbei sind Aussparungen 9 des Dachteils 3 sowie Befestigungselemente 6 des Dachteils 3 mit (federnden) Rastelementen 10 auf Sockeln 14 zur Aufnahme von Laschen 7 von korrespondierenden Befestigungselementen 5 des Verdeckstoffs gemäß Fig. 3 abgebildet.

Im Bereich des Dachteils 3 wird nach Fig. 3 die erfindungsgemäße Verbindung von Verdeckstoff 4 und Dachteil 3 über die am Verdeckstoff 4 angebrachten Befestigungselemente 5 hergestellt, welche Laschen 7 mit Ausnehmungen 8 aufweisen. Die Befestigungselemente 5 werden mit dem daran angebrachten Verdeckstoff 4 durch die Aussparungen 9 des Dachteils 3 hindurchgeführt, um dort mit den korrespondierenden Befestigungselementen 6 mit in die Ausnehmungen 8 einrastenden Rastelementen 10 eine lösbare Verbindung einzugehen.

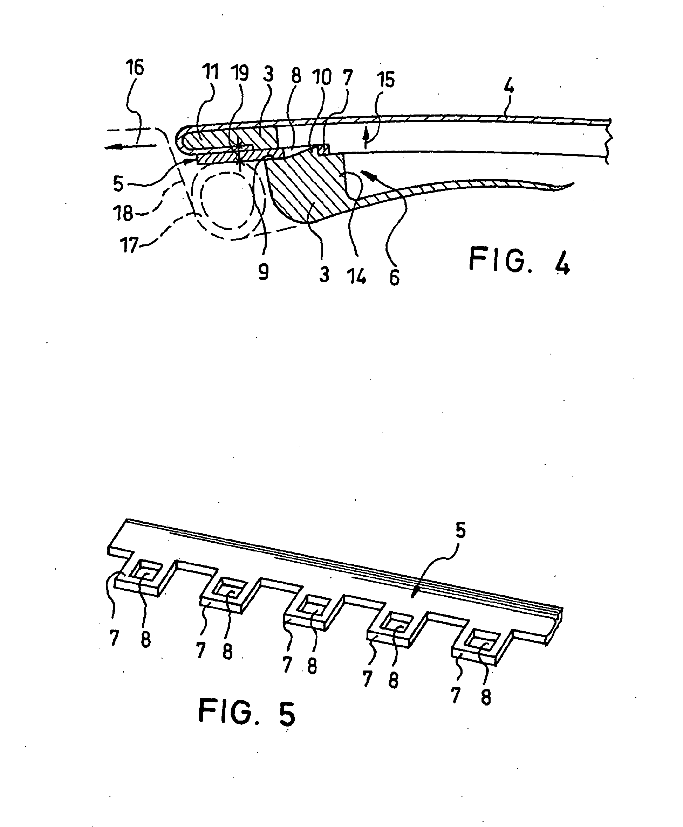

Zur Demontage kann die nach Fig. 3 vorhandene Verbindung zwischen den Befestigungselementen 5 und 6 durch Verbringung der Befestigungselemente 5 in Richtung 15 und eine darauffolgendes Herausziehen der Befestigungselemente 5 in Richtung 16 gelöst werden (vgl. Fig. 4).

Fig. 4 zeigt einen Schnitt A-A nach Fig. 3 mit einem Verdeckstoff 4 mit z.B. angenähtem (Naht 19) Befestigungselement 5, welches mit dem korrespondierenden Befestigungselement 6 des Dachteils 3 einrastend durch Aufnahme der Rastelemente 10 in Ausnehmungen 8 der Laschen 7 verbunden ist. Dabei ist das Befestigungselement 5 im eingeschobenen Zustand durch Aussparungen 9 des Dachteils 3 hindurchgeschoben. Ferner spannt sich der Verdeckstoff 4 um einen Vorsprung 11 des Dachteils 3 herum. Das Dachteil 3 liegt auf einer Dichtung 17 am umlaufenden Rand 18 der Dachöffnung des Fahrzeugs 2 auf.

Aus Fig. 5 geht eine Ausbildung des Befestigungselements 5 als kammartiges Flächenelement hervor, wobei die Kammelemente als Laschen 7 mit Ausnehmung 8 ausgebildet sind. Dieses Flächenelement kann als Spritzgußteil bzw. Polypropylen-Festelement hergestellt werden.

In seitlichen Bereichen des Verdecks 1 kann auch eine an sich bekannte Befestigung des Verdeckstoffs 4 über umgenähte Taschen erfolgen (nicht näher abgebildet).

### Bezugszeichen

- 1: Verdeck
- 2: Fahrzeug
- 3: Dachteil
- 4: Verdeckstoff
- 5, 6: Befestigungselement
- 7: Lasche
- 8: Ausnehmung
- 9: Aussparung
- 10: Rastelement
- 11: Vorsprung
- 12: Richtung
- 13: vorderer Bereich
- 14: Sockel
- 15,16: Richtung
- 17: Dichtung
- 18: Rand
- 19: Naht

## Patentansprüche

1. Verdeck (1) eines Fahrzeugs (2) mit einem Dachteil (3), welches mit einem Verdeckstoff (4) verbunden ist, wobei am Verdeckstoff (4) mindestens ein Befestigungselement (5) angebracht ist, welches im montierten Zustand des Verdecks (1) lösbar mit mindestens einem korrespondierenden Befestigungselement (6) des Dachteils (3) verbunden ist,
**dadurch gekennzeichnet, dass**
das am Verdeckstoff (4) angebrachte Befestigungselement (5) als kammartiges Flächenelement ausgebildet ist und Laschen (7) mit Ausnehmungen (8) zum Eingriff des korrespondierenden Befestigungselements (6) des Dachteils (3) aufweist wobei das korrespondierende Befestigungselement (6) des Dachteils (3) ein Rastelement (10) zur lösbaren Verbindung mit dem Befestigungselement (5) aufweist.

2. Verdeck (1) nach Anspruch 1, wobei das Verdeck (1) als Faltverdeck ausgebildet ist.

3. Verdeck (1) nach einem der vorhergehenden Ansprüche, wobei das Dachteil (3) mindestens eine Aussparung (9) zur Aufnahme des Befestigungselements (5) aufweist.

4. Verdeck (1) nach einem der vorhergehenden Ansprüche, wobei der Verdeckstoff (4) bei der Anbringung am Dachteil (3) einen Vorsprung (11) des Dachteils (3) überdeckt.

5. Verdeck (1) nach einem der vorhergehenden Ansprüche, wobei das Befestigungselement (5) mit dem Verdeckstoff (4) vernäht ist.

6. Verdeck (1) nach einem der vorhergehenden Ansprüche, wobei das Befestigungselement (5) mit dem Verdeckstoff (4) verklebt oder verschweißt ist.

7. Dachmodul eines Fahrzeugs (2) mit einem Verdeck (1) nach einem der Ansprüche 1-6.

## Claims

1. Convertible top (1) of a vehicle (2) with a roof part (3) which is connected to a convertible-top cloth (4), wherein at least one fastening element (5) is attached to the convertible-top cloth (4), said fastening element, in the fitted state of the convertible top (1), being connected releasably to at least one corresponding fastening element (6) of the roof part (3), **characterized in that** the fastening element (5) which is attached to the convertible-top cloth (4) is designed as a comb-like two-dimensional element and has tabs (7) having cutouts (8) for the engagement of the corresponding fastening element (6) of the roof part (3), with the corresponding fastening element (6) of the roof part (3) having a latching element (10) for releasable connection to the fastening element (5).

2. Convertible top (1) according to Claim 1, wherein the convertible top (1) is designed as a folding top.

3. Convertible top (1) according to one of the preceding claims, wherein the roof part (3) has at least one recess (9) for receiving the fastening element (5).

4. Convertible top (1) according to one of the preceding claims, wherein the convertible-top cloth (4) covers a projection (11) of the roof part (3) upon attachment to the roof part (3).

5. Convertible top (1) according to one of the preceding claims, wherein the fastening element (5) is sewn to the convertible-top cloth (4).

6. Convertible top (1) according to one of the preceding claims, wherein the fastening element (5) is adhesively bonded or welded to the convertible-top cloth (4).

7. Roof module of a vehicle (2) with a convertible top (1) according to one of Claims 1-6.

## Revendications

1. Toit (1) d'un véhicule (2) avec un élément de toit (3), qui est assemblé à une capote (4), dans lequel un élément de fixation (5) est attaché à la capote (4), lequel est, à l'état monté du toit (1), est accroché de façon séparable à au moins un élément de fixation correspondant (6) de l'élément de toit (3), **caractérisé en ce que** l'élément de fixation (5) attaché à la capote (4) est réalisé sous la forme d'un élément plat de type peigne et présente des pattes (7) avec des évidements (8) pour l'accrochage de l'élément de fixation correspondant (6) de l'élément de toit (3), dans lequel l'élément de fixation correspondant (6) de l'élément de toit (3) présente un élément d'encliquetage (10) pour l'accrochage séparable avec l'élément de fixation (5).

2. Toit (1) selon la revendication 1, dans lequel le toit (1) est réalisé en forme de toit pliant.

3. Toit (1) selon l'une quelconque des revendications précédentes, dans lequel l'élément de toit (3) présente au moins un évidement (9) destiné à recevoir l'élément de fixation (5).

4. Toit (1) selon l'une quelconque des revendications précédentes, dans lequel la capote (4) recouvre une saillie (11) de l'élément de toit (3) lors de la pose sur l'élément de toit (3).

5. Toit (1) selon l'une quelconque des revendications précédentes, dans lequel l'élément de fixation (5) est cousu à la capote (4).

6. Toit (1) selon l'une quelconque des revendications précédentes, dans lequel l'élément de fixation (5) est collé ou soudé la capote (4).

7. Module de toit d'un véhicule (2) avec un toit (1) selon l'une quelconque des revendications 1 à 6.
